# EUROPEAN PATENT SPECIFICATION

(11) **EP 3 940 141 B1**
(45) Date of publication and mention of the grant of the patent: **11.10.2023**
(21) Application number: 20795610.3
(22) Date of filing: 10.03.2020
(51) Int. Cl.: D21C 5/02, B09B 5/00, B29B 17/02, C08J 11/06, C08J 11/08, C08J 11/16, D21B 1/32

(54) **METHOD FOR PRODUCING RECYCLED PULP FIBER FROM USED ABSORBENT ARTICLE CONTAINING HIGHLY WATER-ABSORBENT POLYMER, PULP FIBER, AND EXCREMENT**
VERFAHREN ZUR HERSTELLUNG VON RECYCLIERTER ZELLSTOFFFASER AUS EINEM ABSORBIERENDEN ARTIKEL MIT HOCH WASSERABSORBIERENDEM POLYMER, ZELLSTOFFFASER UND EXKREMENT
PROCÉDÉ DE PRODUCTION DE FIBRE DE PÂTE RECYCLÉE À PARTIR D'UN ARTICLE ABSORBANT USAGÉ CONTENANT UN POLYMÈRE À HAUTE ABSORPTION D'EAU, UNE FIBRE DE PÂTE ET DES EXCRÉMENTS

(30) Priority: 26.04.2019 JP 2019086818
(43) Date of publication of application: 19.01.2022
(73) Proprietor: Unicharm Corporation, Shikokuchuo-shi, Ehime 799-0111 (JP)
(72) Inventor: KONISHI, Takayoshi, Kanonji-shi, Kagawa 769-1602 (JP); HIRAOKA, Toshio, Kanonji-shi, Kagawa 769-1602 (JP); KURITA, Noritomo, Kanonji-shi, Kagawa 769-1602 (JP)
(74) Representative: Dolleymores
(86) International application number: PCT/JP2020/010371
(87) International publication number: WO 2020/217757

(56) References cited:
- EP-A1- 2 891 747
- EP-A1- 3 199 254
- WO-A1-2016/103985
- WO-A1-2018/025500
- WO-A1-2019/087489
- JP-A- 2000 084 533
- JP-A- 2001 047 096
- JP-A- 2017 193 819
- JP-A- 2019 058 906

## Description

### FIELD

The present invention relates to a method of producing recycled pulp fibers from a used absorbent article containing super absorbent polymers, pulp fibers, and excrement.

### BACKGROUND

Methods of recovering (producing) recycled pulp fibers from a used absorbent article are known. For example, Patent Literature 1 discloses a method of recovering pulp fibers from a used sanitary product containing the pulp fibers and super absorbent polymers to produce recycled pulp fibers that is reusable as a sanitary product. This method includes a step of decomposing a used sanitary product into pulp fibers and other materials by exerting a physical force to the used sanitary product in an aqueous solution containing a polyvalent metal ion or an acidic aqueous solution having a pH of 2.5 or lower, a step of separating the pulp fibers from a mixture of the pulp fibers and the other materials generated in the decomposition step, and a step of treating the separated pulp fibers in an ozone-containing aqueous solution having a pH of 2.5 or lower.

### [CITATION LIST]

### [PATENT LITERATURE]

Patent Literature 1: Japanese Unexamined Patent Publication No. 2016-881
WO 2018/025500 A1 discloses a method which separates and recovers pulp fibres from a used absorbent article.

### SUMMARY

### [TECHNICAL PROBLEM]

According to Patent Literature 1, the amount of the aqueous solution that is used with respect to 1 kg of the used sanitary product in the decomposition step is assumed to be preferably 3 to 50 kg, that is, an amount 3 to 50 times the used sanitary product. This is because, when the amount of the aqueous solution is too small, the used sanitary product cannot be effectively stirred in the aqueous solution. Similarly, the amount of water that is used with respect to 100 parts by mass of the separated pulp fibers (based on the dried pulp fibers) in the step of treating the separated pulp fibers with the ozone-containing aqueous solution (ozone concentration: 1 to 50 ppm by mass) is assumed to be preferably 300 to 5000 parts by mass, that is, an amount 3 to 50 times the pulp fibers. As described above, in the method described in Patent Literature 1, since the amount of water that is used for the aqueous solution is extremely large, there is a risk that it may become difficult to use the method in regions or countries where it is difficult to sufficiently supply water. In addition, even in regions or countries where water can be sufficiently supplied, since the amount of water drained becomes large, there is a risk that the treatment of the drained water may become difficult.

Here, as a method of reducing the amount of water that is used for the aqueous solution, a method of reusing the aqueous solution after use is conceivable. However, it was clarified this time by the inventors' studies that, in the method of Patent Literature 1, since the aqueous solution that is used in the decomposition step and recovered in the separation step contains a large amount of an organic matter having a relatively large molecular weight such as excrement contained in the used sanitary product, the viscosity of the aqueous solution to be recovered becomes high. In such a case, the reuse of the aqueous solution that is recovered may cause an event that the used sanitary product cannot be effectively stirred in the aqueous solution in the decomposition step or it becomes difficult to progress a reaction between the used sanitary product and the acidic aqueous solution. Due to that, there is a risk that it may become difficult to reuse the aqueous solution that is recovered from a production step.

An object of the present invention is to provide a method of producing a recycled pulp fibers from a used absorbent article by which an aqueous solution that is recovered from a production step can be made reusable and the amount of water that is used for the aqueous solution can be reduced.

### [SOLUTION TO PROBLEM]

The present invention is a method of producing a recycled pulp fibers from a used absorbent article containing super absorbent polymers, pulp fibers, and excrement, the method comprising: a separation step of separating an inactivating aqueous solution containing the excrement and the pulp fibers, respectively, from a liquid mixture in which the inactivating aqueous solution capable of inactivating the super absorbent polymers and the used absorbent article are mixed together; a viscosity reduction step of mixing a first oxidizing agent capable of decomposing the excrement and the separated inactivating aqueous solution, and decomposing the excrement that is contained in the inactivating aqueous solution to reduce a viscosity of the inactivating aqueous solution; and a resupply step of returning the inactivating aqueous solution containing a decomposition product formed by decomposition of the excrement to the separation step.

### [ADVANTAGEOUS EFFECT OF THE INVENTION]

According to the method of producing a recycled pulp fibers from a used absorbent article of the present invention, an aqueous solution that is recovered from a production step can be made reusable, and the amount of water that is used for the aqueous solution can be reduced.

### BRIEF DESCRIPTION OF DRAWINGS

FIG. 1 is a block diagram showing an example of a system according to an embodiment.
FIG. 2 is a flow chart showing an example of a method according to the embodiment.
FIG. 3 is a flow chart showing the example of the method according to the embodiment.

### DESCRIPTION OF EMBODIMENTS

The present embodiment relates to the following aspects.

### [Aspect 1]

A method of producing a recycled pulp fibers from a used absorbent article containing super absorbent polymers, pulp fibers, and excrement, the method comprising: a separation step of separating an inactivating aqueous solution containing the excrement and the pulp fibers, respectively, from a liquid mixture in which the inactivating aqueous solution capable of inactivating the super absorbent polymers and the used absorbent article are mixed together; a viscosity reduction step of mixing a first oxidizing agent capable of decomposing the excrement and the separated inactivating aqueous solution, and decomposing the excrement that is contained in the inactivating aqueous solution to reduce a viscosity of the inactivating aqueous solution; and a resupply step of returning the inactivating aqueous solution containing a decomposition product formed by decomposition of the excrement to the separation step.

In the present method, the inactivating aqueous solution is returned to the separation step again by the resupply step after the separation step. That is, the inactivating aqueous solution is reused in the separation step again after the separation step. Therefore, the addition of a new inactivating aqueous solution can be suppressed, which makes it possible to reduce the amount of water that is used for the inactivating aqueous solution. In this case, since the inactivating aqueous solution after the separation step contains a large amount of an organic matter having a relatively large molecular weight such as excrement, the viscosity of the inactivating aqueous solution becomes high, and it is also conceivable that the reuse of the inactivating aqueous solution as an inactivating aqueous solution may become difficult. Therefore, in the present method, in the viscosity reduction step before the resupply step, the organic matter having a relatively large molecular weight such as excrement that is contained in the inactivating aqueous solution is decomposed with the first oxidizing agent, thereby decreasing the molecular weight of the organic matter and decreasing the viscosity of the inactivating aqueous solution. That is, the viscosity of the inactivating aqueous solution can be decreased, and thus the reuse of the inactivating aqueous solution can be made easy. Therefore, in the method of producing a recycled pulp fibers from a used absorbent article, an aqueous solution that is recovered from a production step can be made reusable, and the amount of water that is used for the aqueous solution can be reduced.

### [Aspect 2]

The method according to aspect 1, further comprising: a solubilization step of mixing an oxidizing agent aqueous solution containing a second oxidizing agent capable of decomposing the super absorbent polymers and the pulp fibers separated in the separation step, and decomposing the super absorbent polymers that is contained in the pulp fibers to solubilize the super absorbent polymers in the oxidizing agent aqueous solution; an additional separation step of separating the oxidizing agent aqueous solution containing an additional decomposition product formed by decomposition of the super absorbent polymers and the pulp fibers; and an additional resupply step of returning the oxidizing agent aqueous solution containing the additional decomposition product to the solubilization step.

In the present method, the oxidizing agent aqueous solution is returned to the solubilization step again by the additional resupply step after the solubilization step. That is, the oxidizing agent aqueous solution is reused in the solubilization step again after the solubilization step. Therefore, the addition of a new oxidizing agent aqueous solution can be suppressed, which makes it possible to reduce the amount of water that is used for the oxidizing agent aqueous solution. In this case, the super absorbent polymers is decomposed in the solubilization step to have a small molecular weight and is turned into a different decomposition product that is soluble in the oxidizing agent aqueous solution. This makes it possible to suppress the viscosity of the oxidizing agent aqueous solution at a low level and to facilitate the reuse of the oxidizing agent aqueous solution. Therefore, in the method of producing a recycled pulp fibers from a used absorbent article, the amount of water that is used for the aqueous solution can be further reduced by reusing the aqueous solution that is recovered from the production step.

### [Aspect 3]

The method according to aspect 1 or 2, wherein the oxidizing agent includes at least one of ozone, chlorine dioxide, hydrogen peroxide, hypochlorous acid, salts of hypochlorous acid, and peracetic acid.

In the present method, the oxidizing agent includes at least one of ozone, chlorine dioxide, hydrogen peroxide, hypochlorous acid, salts of hypochlorous acid, and peracetic acid. These oxidizing agents are capable of easily decreasing the molecular weight of the super absorbent polymers or excrement by an oxidizing action, which makes it possible to suppress the viscosity of the aqueous solution at a low level.

### [Aspect 4]

The method according to any one of aspects 1 to 3, wherein the inactivating aqueous solution contains an organic acid as an inactivating agent.

In the present method, the inactivating aqueous solution contains an organic acid as an inactivating agent. The organic acid can be stably present in the production step except for functioning as the inactivating agent. Therefore, the inactivating aqueous solution can be more reliably reused while reducing the influence of an acid on operators, apparatuses, and the like.

### [Aspect 5]

The method according to aspect 4, wherein the organic acid includes citric acid.

In the present method, the organic acid includes citric acid. This makes it possible to remove a polyvalent metal with the citric acid even in a case where the polyvalent metal is contained as an impurity in the recirculated inactivating aqueous solution. Therefore, the inactivating aqueous solution can be more reliably reused while removing the impurity and reducing the influence of an acid on operators, apparatuses, and the like.

### [Aspect 6]

The method according to aspect 4 or 5, further comprising: an adjusting step of adjusting a pH in the inactivating aqueous solution containing a decomposition product formed by decomposition of the super absorbent polymers and the excrement, after the viscosity reduction step and before the resupply step.

The present method includes an adjusting step of adjusting the pH of the inactivating aqueous solution. This makes it possible to adjust the pH of the inactivating aqueous solution to a pH necessary for the organic acid to inactivate the super absorbent polymers. Therefore, the inactivating aqueous solution can be put into a state where the super absorbent polymers can be reliably inactivated and can be more reliably reused.

### [Aspect 7]

The method according to aspect 2, wherein a mass of water that is discharged from water that is used in the separation step, the viscosity reduction step, the resupply step, the solubilization step, the additional separation step, and the additional resupply step is 1.2 to 2 times a mass of the used absorbent article that is supplied to the separation step.

In the present method, the mass of water that is discharged from the water that is used in the separation step, the viscosity reduction step, the resupply step, the solubilization step, the additional separation step, and the additional resupply step is 1.2 to 2 times the mass of the used absorbent article that is supplied to the separation step. That is, in the present method, since the aqueous solution is used in a circulated manner, the amount of water that is used can be significantly reduced. Therefore, in the method of producing a recycled pulp fibers from a used absorbent article, the aqueous solution that is recovered from the production step can be made reusable, and the amount of water that is used for the aqueous solution can be reduced.

Hereinafter, a method of producing a recycled pulp fibers from a used absorbent article containing super absorbent polymers, pulp fibers, and excrement according to the embodiment will be described. Here, the used absorbent article refers to an absorbent article used by a user and includes an absorbent article in a state where the user's excrement is absorbed and held, and also includes an absorbent article that has been used but does not absorb and hold excrement or an absorbent article that remains unused, but has been discarded. Examples of the absorbent article include a paper diaper, an incontinence pad, a sanitary napkin, a bed sheet, and a pet sheet. In addition, the recycled pulp fibers refer to pulp fibers that have been contained in a product and is recovered from the used product and reused (recycled). It should be noted that, in the method of producing recycled pulp fibers from a used absorbent article according to the present embodiment, since the super absorbent polymers are recovered and separated together with the pulp fibers in the middle and reusable super absorbent polymers are generated, the method can also be referred to as a method of recovering (or generating) super absorbent polymers from a used absorbent article.

First, a configuration example of the absorbent article will be described. The absorbent article includes a top sheet, a back sheet, and an absorbent body arranged between the top sheet and the back sheet. The size of the absorbent article is, for example, approximately 15 to 100 cm in length and 5 to 100 cm in width. It should be noted that the absorbent article may further include a different member that ordinary absorbent articles include, for example, a diffusion sheet, leakproof walls, side sheets, or the like.

Examples of a configuration member of the top sheet include a liquid-permeable nonwoven fabric, a synthetic resin film having a liquid-permeating hole, a composite sheet thereof, and the like. Examples of a configuration member of the back sheet include a liquid-impermeable nonwoven fabric, a liquid-impermeable synthetic resin film, and a composite sheet thereof. Examples of a configuration member of the diffusion sheet include a liquid-permeable nonwoven fabric. Examples of a configuration member of the leakproof walls or the side sheets include a liquid-impermeable nonwoven fabric, and the leakproof walls may include elastic members such as rubber. Here, the material of the nonwoven fabric or the synthetic resin film is not particularly limited as long as the material can be used as absorbent articles, and examples thereof include olefin-based resins such as polyethylene and polypropylene, polyamide-based resins such as 6-nylon and 6,6-nylon, polyester-based resins such as polyethylene terephthalate (PET) and polybutylene terephthalate (PBT), and the like. In the present embodiment, an absorbent article for which a film is used as the configuration member of the back sheet and a nonwoven fabric is used as the configuration member of the top sheet will be described as an example.

Examples of the configuration member of the absorbent body include absorbent body materials, that is, pulp fibers and super absorbent polymers. The pulp fiber is not particularly limited as long as the pulp fiber can be used for absorbent articles, and examples thereof include cellulose-based fibers. Examples of the cellulose-based fibers include a wood pulp, a crosslinked pulp, a non-wood pulp, a regenerated cellulose, a semi-synthetic cellulose, and the like. As the size of the pulp fiber, the average value of the long diameters of the fibers is, for example, several tens of micrometer and preferably 20 to 40 µm, and the average value of the fiber lengths is, for example, several millimeters and preferably 2 to 5 mm. The super absorbent polymer (SAP) is not particularly limited as long as the super absorbent polymer can be used as absorbent articles, and examples thereof include polyacrylate-based, polysulfonate-based, and maleic anhydride-based water-absorbent polymers. As the size of the (dried) super absorbent polymer, the average value of the particle sizes is, for example, several hundred micrometers and preferably 200 to 500 µm. The absorbent body may include a core wrap formed of a liquid-permeable sheet.

One surface and the other surface of the absorbent body are joined to the top sheet and the back sheet, respectively, through an adhesive. In a plan view, a portion (peripheral portion) of the top sheet that extends toward the outer side of the absorbent body so as to surround the absorbent body is joined to a portion (peripheral portion) of the back sheet that extends toward the outer side of the absorbent body so as to surround the absorbent body through the adhesive. Therefore, the absorbent body is wrapped inside the joined body of the top sheet and the back sheet. The adhesive is not particularly limited as long as the adhesive can be used for absorbent articles, and examples thereof include a hot-melt type adhesive. Examples of the hot-melt type adhesive include pressuresensitive adhesive or heat-sensitive adhesives containing, as a main component, rubber such as styrene-ethylene-butadiene-styrene, styrene-butadiene-styrene, or styrene-isoprene-styrene or containing, as a main component, an olefin such as polyethylene.

Next, the method of producing a recycled pulp fibers from a used absorbent article containing super absorbent polymers, pulp fibers, and excrement according to the embodiment will be described.

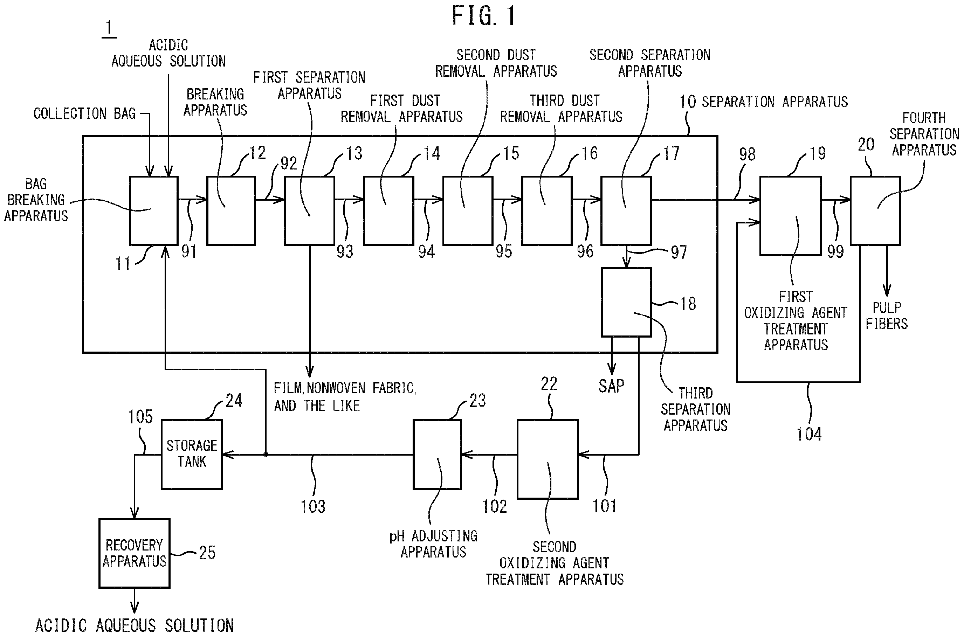

First, a system 1 that is used in the method of producing recycled pulp fibers from a used absorbent article will be described. FIG. 1 is a block diagram showing an example of the system 1 according to the present embodiment. The system 1 is an apparatus for producing recycled pulp fibers from a used absorbent article, with which an aqueous solution that is recovered from a production step can be made reusable and the amount of water that is used for the aqueous solution can be reduced. The system 1 includes a separation apparatus 10 and a second oxidizing agent treatment apparatus 22, and preferably includes a first oxidizing agent treatment apparatus 19, a fourth separation apparatus 20, a pH adjusting apparatus 23, and a storage tank 24. Hereinafter, the system 1 will be described in detail.

The separation apparatus 10 separates an inactivating aqueous solution containing excrement and pulp fibers, respectively, from a liquid mixture in which the inactivating aqueous solution capable of inactivating super absorbent polymers and a used absorbent article containing the super absorbent polymers, the pulp fibers and the excrement are mixed together, and preferably further separates the super absorbent polymers. The configuration of the separation apparatus 10 is not particularly limited as long as the separation apparatus 10 has the above-described functions, and examples thereof include a configuration described below. That is, the separation apparatus 10 includes, for example, a bag breaking apparatus 11, a breaking apparatus 12, a first separation apparatus 13, a first dust removal apparatus 14, a second dust removal apparatus 15, a third dust removal apparatus 16, a second separation apparatus 17, and a third separation apparatus 18.

In the present embodiment, used absorbent articles are recovered and acquired from the outside and are used for reuse (recycling). At that time, the used absorbent articles are enclosed in a plurality of bags for collection (hereinafter, also referred to as "collection bags") so that excrement, fungi, and odors do not leak to the outside. Each of the used absorbent articles in the collection bags is recovered or the like in a state of being, mainly, rounded or folded such that the top sheet, onto which excrement is excreted, faces inward so as to prevent, for example, the excrement or the fungi from being exposed toward the surface and the odors from diffusing toward the surrounding.

The bag breaking apparatus 11 and the breaking apparatus 12 will be described. The bag breaking apparatus 11 includes, for example, a solution tank that stores an inactivating aqueous solution and a bag breaking blade that rotates in the solution tank and opens holes on the collection bags containing the used absorbent articles that have been put into the solution tank, respectively, with the bag breaking blade in the inactivating aqueous solution. Thereby, a liquid mixture 91 of the collection bags into which the inactivating aqueous solution has intruded through the holes and the inactivating aqueous solution is generated. Here, the inactivating aqueous solution refers to an aqueous solution that inactivates the super absorbent polymers and degrades the water absorption performance of the super absorbent polymers by inactivation. Therefore, in the case of having absorbed water or excrement more than the degraded water absorption performance, the super absorbent polymers releases the water or the excrement until the amount of the water or the excrement absorbed becomes acceptable by the water absorption performance, that is, dehydrates. Hereinafter, a case where an acidic aqueous solution is used as the inactivating aqueous solution will be described as an example.

The breaking apparatus 12 includes, for example, a biaxial breaker (for example, a biaxial rotary breaker, a biaxial differential breaker, or a biaxial shear breaker) and breaks each of the collection bags containing the used absorbent articles in the liquid mixture 91 supplied from the bag breaking apparatus 11. Thereby, a liquid mixture 92 having broken matters from the collection bags containing the used absorbent articles and the acidic aqueous solution is generated. Here, the broken matter contains the pulp fibers, the super absorbent polymers, and other materials (the material of the collection bag, the films, the nonwoven fabrics, an elastic body, and the like).

The first separation apparatus 13 includes, for example, a pulper separator having a stirring and separating tank that functions as a cleaning tank and a sieving tank and separates the pulp fibers, the super absorbent polymers, the excrement, and the acidic aqueous solution from the liquid mixture 92 while performing cleaning in which the excrement and the like are removed from the broken matters by stirring the liquid mixture 92 supplied from the breaking apparatus 12. Thereby, a liquid mixture 93 containing the pulp fibers, the super absorbent polymers, the excrement, and the acidic aqueous solution is generated, and the material of the collection bag and the films, nonwoven fabrics, elastic body, and the like of the used absorbent articles are recovered.

It should be noted that the used absorbent articles may not be broken in the inactivating aqueous solution (for example, the acidic aqueous solution) and the used absorbent articles may be broken in each collection bag in a gas (for example: in an air). In such a case, the bag breaking apparatus 11 is not necessary, and the breaking apparatus 12 breaks the collection bags in the air in the absence of the inactivating aqueous solution. After that, the broken matters in the breaking apparatus 12 and an inactivating aqueous solution are supplied to the first separation apparatus 13.

It should be noted that, in a case where the acidic aqueous solution is not used as the inactivating aqueous solution in the bag breaking apparatus 11 through the first separation apparatus 13, the inactivating aqueous solution containing the pulp fibers, the super absorbent polymers, and the excrement that is supplied to the first dust removal apparatus 14 is made into a substantially acidic aqueous solution by adding an acidic aqueous solution in the first dust removal apparatus 14.

The first dust removal apparatus 14 includes, for example, a screen separator and separates the liquid mixture 93 supplied from the first separation apparatus 13 into the pulp fibers, the super absorbent polymers, and the excrement in the acidic aqueous solution and other materials (foreign matters) with a screen. Thereby, a liquid mixture 94 containing the pulp fibers, the super absorbent polymers, the excrement, and the acidic aqueous solution, which decreases in weight by the amount of the foreign matters, is generated, and the other materials are removed. It is preferable that the pH in the acidic aqueous solution in the first dust removal apparatus 14 is maintained within a predetermined range (the pH varies within ± 1.0) by adding water or an acidic aqueous solution as necessary.

The second dust removal apparatus 15 includes, for example, a screen separator and separates the liquid mixture 94 supplied from the first dust removal apparatus 14 into the pulp fibers, the super absorbent polymers, and the excrement in the acidic aqueous solution and other materials (fine foreign matters) with a finer screen than the first dust removal apparatus 14. Thereby, a liquid mixture 95 containing the pulp fibers, the super absorbent polymers, the excrement, and the acidic aqueous solution, which further decreases in weight by the amount of the foreign matters, is generated, and the other materials are further removed. It is preferable that the pH in the acidic aqueous solution in the second dust removal apparatus 15 is maintained within a predetermined range (the pH varies within ± 1.0) by adding water or an acidic aqueous solution as necessary.

The third dust removal apparatus 16 includes, for example, a cyclone separator and separates the liquid mixture 95 supplied from the second dust removal apparatus 15 into the pulp fibers, the super absorbent polymers, and the excrement in the acidic aqueous solution and other materials (foreign matters having a heavy specific gravity) by centrifugal separation. Thereby, a liquid mixture 96 containing the pulp fibers, the super absorbent polymers, the excrement, and the acidic aqueous solution, which still further decreases in weight by the amount of the foreign matters, is generated, and the other materials are still further removed. It is preferable that the pH in the acidic aqueous solution in the third dust removal apparatus 16 is maintained within a predetermined range (the pH varies within ± 1.0) by adding water or an acidic aqueous solution as necessary.

It should be noted that, depending on the state of the liquid mixture 92 or the like (for example, the amount or size of the foreign matters), at least one of the first dust removal apparatus 14 through the third dust removal apparatus 16 may be omitted.

The second separation apparatus 17 includes, for example, a drum screen separator and separates the liquid mixture 96 supplied from the third dust removal apparatus 16 into the super absorbent polymers in the acidic aqueous solution and the pulp fibers with a drum screen. Thereby, a liquid mixture 97 containing the super absorbent polymers, the excrement, and the acidic aqueous solution is generated, and the pulp fibers is removed as a mixture 98.

The third separation apparatus 18 includes, for example, an inclined screen and separates the liquid mixture 97 supplied from the second separation apparatus 17 into a solid containing the super absorbent polymers and a liquid containing the excrement and the acidic aqueous solution with the screen. Thereby, super absorbent polymers is generated, and a liquid mixture 101 containing the acidic aqueous solution containing the excrement, the super absorbent polymers that could not be separated and remains, a decomposition product of a macromolecular water-absorbent polymers, and the like is generated.

The first oxidizing agent treatment apparatus 19 includes, for example, a treatment tank that stores an oxidizing agent aqueous solution and an oxidizing agent supply apparatus that supplies an oxidizing agent to an aqueous solution (or the oxidizing agent aqueous solution) in the treatment tank. The first oxidizing agent treatment apparatus 19, for example, injects the mixture 98 supplied from the third separation apparatus 18 into the treatment tank from the upper part or lower part of the treatment tank and mixes the mixture 98 with the oxidizing agent aqueous solution in the treatment tank. In addition, the first oxidizing agent treatment apparatus 19 decomposes the super absorbent polymers that is contained in the pulp fibers in the oxidizing agent aqueous solution with the oxidizing agent that is supplied from the lower part of the treatment tank with the oxidizing agent supply apparatus to solubilize the super absorbent polymers in the oxidizing agent aqueous solution. Thereby, a liquid mixture 99 having the pulp fibers from which the super absorbent polymers has been removed and the oxidizing agent aqueous solution containing a decomposition product of the super absorbent polymers is generated. In addition, the super absorbent polymers can also be sterilized and bleached at the same time as being decomposed and solubilized. Here, the oxidizing agent is an oxidizing agent capable of decomposing the super absorbent polymers, examples thereof include ozone, chlorine dioxide, hydrogen peroxide, hypochlorous acid, salts of hypochlorous acid (for example, sodium hypochlorite), and peracetic acid, and, among them, ozone is preferable from the viewpoint of the oxidizing power, the sterilizing power, and the bleaching power. It should be noted that, from the viewpoint of more reliably performing the decomposition treatment of the super absorbent polymers or the like, a plurality of the first oxidizing agent treatment apparatuses 19 may be continuously provided in series, and the treatment may be continuously performed a plurality of times.

In the case of using ozone as the oxidizing agent, the oxidizing agent supply apparatus is an ozone supply apparatus and supplies an ozone-containing gas, which is a gaseous substance, to the treatment tank. A nozzle of the ozone supply apparatus is arranged in the lower part of the treatment tank and supplies the ozone-containing gas to the oxidizing agent aqueous solution as a plurality of fine bubbles. As the oxidizing agent aqueous solution, an acidic aqueous solution is preferable from the viewpoint of suppressing the deactivation of ozone or the inactivation of the super absorbent polymers. Furthermore, in the case of using an acidic aqueous solution as the inactivating aqueous solution in the breaking treatment or the dust removal treatment, since there is continuity between the respective treatments, the aqueous solution can be used with no waste, the amount of water can be reduced, and the treatments can be stably and reliably performed. In addition, as an acid that is used in the acidic aqueous solution, therefore, an acid that is used as the inactivating agent in the inactivating aqueous solution, an organic acid is preferable from the viewpoint of reducing the influence of the acid on operators or apparatuses, and, particularly, citric acid is preferable from the viewpoint of the removal of metal.

The ozone concentration in the oxidizing agent aqueous solution is not particularly limited as long as the concentration is high enough to decompose the super absorbent polymers, but is preferably 1 to 50 ppm by mass. When the concentration is too low, the super absorbent polymers cannot be completely solubilized, and there is a risk that the super absorbent polymers may remain in the pulp fibers. When the concentration is too high, there is a risk that the pulp fibers may be damaged. The treatment time in the first oxidizing agent treatment apparatus 19 is not particularly limited as long as the time is long enough to decompose the super absorbent polymers, but becomes short when the ozone concentration in the oxidizing agent aqueous solution is high and becomes long when the ozone concentration is low, and is typically 5 to 120 minutes. The product of the ozone concentration (ppm) in the oxidizing agent aqueous solution and the treatment time (minutes) of the treatment step (hereinafter, also referred to as "CT value") is preferably 100 to 6000 ppm-minute. When the CT value is too small, the super absorbent polymers cannot be completely solubilized, and there is a risk that the super absorbent polymers may remain in the pulp fibers. When the CT value is too large, there is a risk that the pulp fibers may be damaged.

The fourth separation apparatus 20 includes, for example, a screen separator and separates the liquid mixture 99 supplied from the first oxidizing agent treatment apparatus 19 into the pulp fibers and the oxidizing agent aqueous solution with a screen. Thereby, pulp fibers (recycled pulp fibers) are generated, and a liquid mixture 104 having the oxidizing agent aqueous solution containing the decomposition product of the super absorbent polymers is generated.

Meanwhile, the second oxidizing agent treatment apparatus 22 includes, for example, a treatment tank that stores an aqueous solution (for example, an acidic aqueous solution as an inactivating aqueous solution, a part of the liquid mixture 101 that has been treated in advance, or the like) and an oxidizing agent supply apparatus that supplies an oxidizing agent to the aqueous solution in the treatment tank. The second oxidizing agent treatment apparatus 22, for example, injects the liquid mixture 101 supplied from the third separation apparatus 18 into the treatment tank from the upper part or lower part of the treatment tank and mixes the mixture 101 with the aqueous solution in the treatment tank. The liquid mixture 101 contains, in addition to the acidic aqueous solution, the excrement, the super absorbent polymers that has not been completely removed, the decomposition product of the macromolecular water-absorbent polymers having a relatively large molecular weight, or the like, and the viscosity of the liquid mixture 101 is relatively high (for example, 8 mPa·s or higher). In addition, the second oxidizing agent treatment apparatus 22 decomposes an organic matter having a relatively large molecular weight such as the excrement that is contained in the aqueous solution with the oxidizing agent that is supplied from the lower part of the treatment tank with the oxidizing agent supply apparatus to solubilize the organic matter in the aqueous solution. Thereby, a liquid mixture 102 having the acidic aqueous solution containing an organic matter having a relatively small molecular weight is generated. The viscosity of the liquid mixture 102 is relatively low (for example, lower than 5 mPa.s). In addition, the organic matter can also be sterilized at the same time as being decomposed and solubilized. Here, the oxidizing agent is an oxidizing agent capable of decomposing an organic matter having a relatively large molecular weight such as excrement, examples thereof include ozone, chlorine dioxide, hydrogen peroxide, hypochlorous acid, salts of hypochlorous acid (for example, sodium hypochlorite), and peracetic acid, and, among them, ozone is preferable due to a high oxidizing power and a high sterilizing power.

It should be noted that, in the case of using ozone as the oxidizing agent, similar to the case of the first oxidizing agent treatment apparatus 19, the oxidizing agent supply apparatus is an ozone supply apparatus and supplies an ozone-containing gas, which is a gaseous substance, to the treatment tank. It should be noted that, from the viewpoint of more reliably performing the decomposition treatment of the super absorbent polymers or the like, a plurality of the second oxidizing agent treatment apparatuses 22 may be continuously provided in series, and the treatment may be continuously performed a plurality of times.

In the present embodiment, at least two stages of a treatment are performed in the second oxidizing agent treatment apparatus 22. As a first stage of the treatment, a treatment is performed with a liquid feeding pump (for example, a turbo mixer pump) capable of mixing ozone that is arranged in the front half of the treatment tank. In this first stage of the treatment, in order to increase the efficiency, ozone and the liquid mixture 101 are mixed together at a high speed in the liquid feeding pump to make ozone into a microbubble form, and subsequently, the ozone is temporarily pressurized at the outlet of the liquid feeding pump, thereby increasing the dissolution efficiency of the ozone in the liquid mixture 101. Thereby, the contact efficiency between the organic matter having a relatively large molecular weight and the ozone is increased and the decomposition efficiency of the organic matter is increased. However, when the amount of the organic matter is too large and the viscosity of the liquid mixture 101 becomes too high, a phenomenon in which the microbubbles become difficult to disappear, fall into a foaming state (paste-like state), and become difficult to be reused as an acidic aqueous solution may occur.

Therefore, as a second stage of the treatment, the liquid mixture 101 containing the ozone microbubbles fed from the liquid feeding pump is fed to the treatment tank, and relatively large ozone gas bubbles (for example, 1 mm or larger in diameter) are supplied to the liquid mixture 101 from the lower part of the treatment tank with the ozone supply apparatus. When the ozone gas is bubbled in the liquid mixture 101 as described above, the decomposition of the organic matter is further progressed, and the decomposition efficiency of the organic matter can be further increased. This makes it possible to further decrease the viscosity of the liquid mixture 101 and to facilitate the remaining microbubbles to detach from the liquid mixture 101 by being attached or absorbed to the large bubbles. Thereby, the reusable liquid mixture 101 in which the organic matter has been decomposed, that is, the liquid mixture 102 is generated.

It should be noted that, in a case where the viscosity of the liquid mixture 101 does not become too high, any one of the first stage and the second stage of the treatment can be omitted. Alternatively, the microbubbles may be used in the second stage of the treatment by omitting the first stage of the treatment and combining the first stage and the second stage of the treatment. In addition, in the first oxidizing agent treatment apparatus 19 as well, two stages of a treatment may be used as in the second oxidizing agent treatment apparatus 22 or any one of the first stage and the second stage of the treatment or a combined treatment of both stages may be used.

The ozone concentration in the acidic aqueous solution is not particularly limited as long as the concentration is high enough to decompose the super absorbent polymers, but is preferably 1 to 50 ppm by mass. When the concentration is too low, the organic matter having a relatively large molecular weight cannot be completely solubilized, and there is a risk that it may become difficult to decrease the viscosity of the acidic aqueous solution. When the concentration is too high, there is a risk of damage to equipment or the like. The treatment time in the second oxidizing agent treatment apparatus 22 is not particularly limited as long as the time is long enough to decompose the organic matter having a relatively large molecular weight, but becomes short when the ozone concentration in the acidic aqueous solution is high and becomes long when the ozone concentration is low, and is typically 5 to 120 minutes. The product of the ozone concentration (ppm) in the acidic aqueous solution and the treatment time (minutes) of the treatment step (hereinafter, also referred to as "CT value") is preferably 100 to 6000 ppm·minute. When the CT value is too small, the organic matter having a relatively large molecular weight cannot be completely solubilized, and there is a risk that it may become difficult to decrease the viscosity of the acidic aqueous solution. When the CT value is too large, there is a risk of damage to equipment or the like.

The pH adjusting apparatus 23 includes, for example, a treatment tank for pH adjustment, a pH sensor that measures the pH of an aqueous solution (or an oxidizing agent aqueous solution) in the treatment tank, and a pH adjusting agent supply apparatus that supplies a pH adjusting agent into the treatment tank. The pH adjusting apparatus 23, for example, supplies the liquid mixture 102 supplied from the second oxidizing agent treatment apparatus 22 to the treatment tank and, if the pH of the liquid mixture 102 is not within a predetermined pH range, adjusts the pH by supplying the pH adjusting agent to the liquid mixture 102 in the treatment tank. Thereby, the liquid mixture 102 having an adjusted pH, that is, a liquid mixture 103 is generated. The liquid mixture 103 can be referred to as a reusable acidic aqueous solution in which the organic matter has been decomposed. The pH adjusting agent is not particularly limited as long as the pH adjusting agent is capable of adjusting the pH, and examples thereof include water for increasing the pH of the acidic aqueous solution (making the pH close to neutral) and citric acid for decreasing the pH (making the pH more acidic). It should be noted that, in a case where the pH of the liquid mixture 101 is stable, the pH adjusting apparatus 23 may not be used.

The liquid mixture 103 in which the pH has been adjusted, that is, the reusable acidic aqueous solution is resupplied to the separation apparatus 10 (the bag breaking apparatus 11, the breaking apparatus 12, the first separation apparatus 13, and the like) and reused.

The storage tank 24 stores the liquid mixture 103 that is not reused. In addition, a recovery apparatus 25 recovers the inactivating agent (for example, an organic acid such as citric acid) or the inactivating aqueous solution (for example, an organic acid aqueous solution such as a citric acid aqueous solution) from a liquid mixture 105 that is the liquid mixture 103 that has been stored in the storage tank 24.

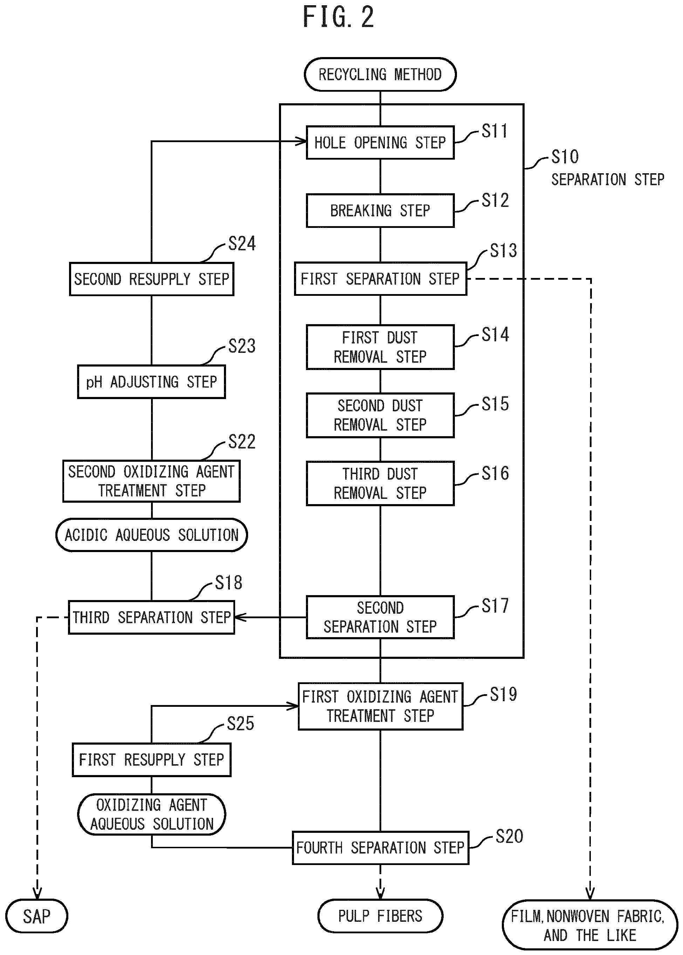

Next, a method of producing recycled pulp fibers from a used absorbent article containing super absorbent polymers, pulp fibers and excrement will be described. This method is a method of recovering pulp fibers from a used absorbent article and thus generating recycled pulp fibers, by which an aqueous solution that is recovered from a production step can be made reusable and the amount of water that is used for the aqueous solution can be reduced. FIG. 2 is a flow chart showing an example of the method according to the present embodiment. This method includes a separation step S10, a second oxidizing agent treatment step (viscosity reduction step) S22, and a second resupply step (resupply step) S24 and preferably includes a first oxidizing agent treatment step (solubilization step) S19, a fourth separation step (additional separation step) S20, and a first resupply step (additional resupply step) S25. Hereinafter, the method will be described in detail.

The separation step S10 separates an inactivating aqueous solution containing excrement and pulp fibers, respectively, from a liquid mixture in which the inactivating aqueous solution capable of inactivating super absorbent polymers and a used absorbent article containing the super absorbent polymers, the pulp fibers, and the excrement are mixed together, and preferably further separates the super absorbent polymers. The configuration of the separation step S10 is not particularly limited as long as the separation step S10 has the above-described functions, and examples thereof include a configuration described below. That is, the separation step S10 includes, for example, a hole opening step S11, a breaking step S12, a first separation step S13, a first dust removal step S14, a second dust removal step S15, a third dust removal step S16, a second separation step S17, and a third separation step S18.

The hole opening step S11 is executed with the bag breaking apparatus 11. Collection bags each enclosing used absorbent articles are injected into a solution tank storing an acidic aqueous solution that is an inactivating aqueous solution, and holes are opened on the collection bags, respectively. Once holes are opened on the collection bags, the acidic aqueous solution surrounds and seals the vicinities of the collection bags so as to prevent dirt, fungi, or odors from the used absorbent articles in the collection bags from being released to the outside. When the acidic aqueous solution intrudes into a collection bag from the hole, the specific gravity of the collection bags become heavier than the specific gravity of the acidic aqueous solution, and the collection bags sediment in the acidic aqueous solution. In addition, the acidic aqueous solution inactivates the super absorbent polymers in the used absorbent article in the collection bag.

The super absorbent polymers in the used absorbent article is inactivated, and the water absorption capability of the super absorbent polymers deteriorates, whereby the super absorbent polymers dehydrates, and the particle sizes become small, and thus it becomes easy to handle the super absorbent polymers in each of the subsequent steps, and the treatment efficiency is enhanced. The reason for using the acidic aqueous solution, that is, an aqueous solution of an inorganic acid or an organic acid as the inactivating aqueous solution is that no ash remains in the pulp fibers compared with an aqueous solution of lime, calcium chloride, or the like, and furthermore, it is easy to adjust the degree of inactivation (the magnitude of the particle sizes or the specific gravity) with the pH. The pH of the acidic aqueous solution is preferably 1.0 or higher and 4.0 or lower and more preferably 1.2 or higher and 2.5 or lower. When the pH is too high, the water absorption capability of the super absorbent polymers cannot be sufficiently degraded. In addition, there is a risk that the sterilizing capability may deteriorate. When the pH is too low, there is a risk of facility corrosion, and a large amount of an alkaline chemical becomes necessary for a neutralization treatment during a drainage treatment. Examples of the organic acid include citric acid, tartaric acid, glycolic acid, malic acid, succinic acid, acetic acid, ascorbic acid, and the like, and hydroxycarbonate-based organic acids such as citric acid, tartaric acid, and gluconic acid are particularly preferable. The chelating effect of citric acid makes it possible to trap and remove a metal ion and the like in excrement, and the cleaning effect of citric acid makes it possible to expect a high dirt component removal effect. Examples of the inorganic acid include sulfuric acid, hydrochloric acid, and nitric acid, and sulfuric acid is preferable from the viewpoint of no chlorine contained, costs, or the like. Since the pH changes with the water temperature, the pH in the present invention is defined as the pH measured at an aqueous solution temperature of 20°C. The organic acid concentration of the organic acid aqueous solution is not particularly limited, but is preferably 0.5 mass% or higher and 4 mass% or lower in a case where the organic acid is citric acid. The inorganic acid concentration of the inorganic acid aqueous solution is not particularly limited, but is preferably 0.1 mass% or higher and 0.5 mass% or lower in a case where the inorganic acid is sulfuric acid. In the present embodiment, citric acid, which is an organic acid, is used.

The breaking step S12 is executed with the breaking apparatus 12. While the acidic aqueous solution containing the collection bags that have sunken below the water surface of the acidic aqueous solution due to the holes opened on the collection bags, that is, the liquid mixture 91, is discharged from the solution tank, the used absorbent articles in the collection bags are broken in the acidic aqueous solution in each collection bag. Here, it is preferable that the breaking step S12 has a step of breaking the used absorbent article in each collection bag such that the average value of the sizes of the broken matters becomes 50 mm or larger and 100 mm or smaller. When the average value is set to smaller than 50 mm, materials other than the pulp fibers (for example, the films, the nonwoven fabrics, elastic bodies, and the like) are cut to be too small, which makes it difficult to separate the materials and the pulp fibers in the subsequent step and decreases the recovery rate of the pulp fibers. When the average value is set to larger than 100 mm, it becomes difficult to make a cut in the used absorbent article. Due to that, the pulp fibers cannot be taken out from some of the used absorbent articles, and the recovery rate of the pulp fibers decreases.

The first separation step S13 is executed with the first separation apparatus 13. While performing cleaning in which the liquid mixture 92 containing the broken matters obtained with the breaking apparatus 12 and the acidic aqueous solution is stirred to remove dirt from the broken matters, the liquid mixture 92 is separated into the pulp fibers, the super absorbent polymers, the excrement, and the acidic aqueous solution and the other materials with the screen. Due to that, the pulp fibers, the super absorbent polymers, the excrement, and the acidic aqueous solution (partially containing the other materials or the like) in the liquid mixture 92 pass through the screen and are separated and sent out from the first separation apparatus 13 (liquid mixture 93). On the other hand, the other materials excluding the pulp fibers, the super absorbent polymers, the excrement, and the acidic aqueous solution in the liquid mixture 92 (the material of the collection bag, the films, nonwoven fabrics, elastic body, and the like of the used absorbent article) are not capable of passing through the screen and remain in the first separation apparatus 13 or are sent out through a different passage. These other materials can be reused as a solid fuel or the like by being, for example, cleaned with cleaning water, then, melted, and solidified.

The first dust removal step S14 is executed with the first dust removal apparatus 14. The acidic aqueous solution containing the pulp fibers, the super absorbent polymers, and the excrement supplied from the first separation apparatus 13, that is, the liquid mixture 93, is separated into the acidic aqueous solution containing the pulp fibers, the super absorbent polymers, and the excrement and other materials with the screen. Due to that, the pulp fibers, the super absorbent polymers, the excrement, and the acidic aqueous solution (partially containing the other materials or the like) in the liquid mixture 93 pass through the screen and are separated and sent out from the first dust removal apparatus 14 (liquid mixture 94). On the other hand, the other materials excluding the pulp fibers, the super absorbent polymers, the excrement, and the acidic aqueous solution in the liquid mixture 93 are not capable of passing through the screen and remain in the first dust removal apparatus 14 or are sent out through a different passage. Some of the other materials are not completely separated and are sent out together with the liquid mixture 94.

The second dust removal step S15 is executed with the second dust removal apparatus 15. The acidic aqueous solution containing the pulp fibers, the super absorbent polymers, and the excrement supplied from the first dust removal apparatus 14, that is, the liquid mixture 94, is separated into the acidic aqueous solution containing the pulp fibers, the super absorbent polymers, and the excrement and other materials with the screen. Due to that, the pulp fibers, the super absorbent polymers, the excrement, and the acidic aqueous solution (partially containing the other materials or the like) in the liquid mixture 94 pass through the screen and are separated and sent out from the second dust removal apparatus 15 (liquid mixture 95). On the other hand, the other materials excluding the pulp fibers, the super absorbent polymers, the excrement, and the acidic aqueous solution in the liquid mixture 94 are not capable of passing through the screen and remain in the second dust removal apparatus 15 or are sent out through a different passage. Some of the other materials are not completely separated and are sent out together with the liquid mixture 95.

The third dust removal step S16 is executed with the third dust removal apparatus 16. The acidic aqueous solution containing the pulp fibers, the super absorbent polymers, and the excrement supplied from the second dust removal apparatus 15, that is, the liquid mixture 95, is centrifuged in an inverted conical chassis and separated into the pulp fibers, the super absorbent polymers, and the excrement in the acidic aqueous solution and other materials. Due to that, the pulp fibers, the super absorbent polymers, the excrement, and the acidic aqueous solution in the liquid mixture 95 are sent out from the upper part of the third dust removal apparatus 16 (liquid mixture 96). On the other hand, the heavy other materials such as metal excluding the pulp fibers, the super absorbent polymers, the excrement, and the acidic aqueous solution in the liquid mixture 95 are sent out from the lower part of the third dust removal apparatus 16.

The second separation step S17 is executed with the second separation apparatus 17. The acidic aqueous solution containing the pulp fibers, the super absorbent polymers, and the excrement supplied from the third dust removal apparatus 16, that is, the liquid mixture 96, is separated into the super absorbent polymers and the pulp fibers in the acidic aqueous solution with the drum screen. Due to that, the acidic aqueous solution containing the super absorbent polymers and the excrement passes through the drum screen and is separated from the liquid mixture 96 and sent out from the second separation apparatus 17 to the third separation apparatus 18 (liquid mixture 97). On the other hand, the pulp fibers in the liquid mixture 96 is not capable of passing through the drum screen and is sent out from the second separation apparatus 17 to the first oxidizing agent treatment apparatus 19 (mixture 98). Therefore, the above-described step can be referred to as a step of separating and recovering the pulp fibers and thus a step of generating recycled pulp fibers.

The third separation step S18 is executed with the third separation apparatus 18. The super absorbent polymers, the excrement, and the acidic aqueous solution supplied from the second separation apparatus 17, that is, the liquid mixture 97, is separated into a solid containing the super absorbent polymers and a liquid containing the excrement and the acidic aqueous solution with the inclined screen. Due to that, the acidic aqueous solution containing the excrement passes through the inclined screen and is separated from the liquid mixture 97 and sent out from the third separation apparatus 18 (liquid mixture 101). Here, the acidic aqueous solution in a liquid mixture 101 contains not only the excrement but also the super absorbent polymers that has not been completely removed, the decomposition product of the macromolecular water-absorbent polymers, and the like. Meanwhile, the super absorbent polymers in the liquid mixture 97 is not capable of passing through the inclined screen and is sent out to the outside of the third separation apparatus 18. Therefore, the above-described step can be referred to as a step of separating and recovering the super absorbent polymers and thus a step of generating recycled super absorbent polymers.

The first oxidizing agent treatment step (solubilization step) S 19 is executed with the first oxidizing agent treatment apparatus 19. The pulp fibers in the solid supplied from the second separation apparatus 17, that is, the mixture 98, is treated with an aqueous solution containing an oxidizing agent (second oxidizing agent, for example, ozone), that is, an oxidizing agent aqueous solution. Therefore, the super absorbent polymers contained in the pulp fibers in a mixed form is oxidatively decomposed and removed from the pulp fibers. That is, the super absorbent polymers attached to the pulp fibers in the mixture 98 (for example, remaining on the surface of the pulp fibers) is oxidatively decomposed with the oxidizing agent aqueous solution, changed into an organic matter having a low molecular weight that is soluble in the aqueous solution, and thereby removed from the pulp fibers. Here, a state where the super absorbent polymers is oxidatively decomposed and changed into an organic matter having a low molecular weight that is soluble in the aqueous solution refers to a state where the super absorbent polymers passes through a 2 mm screen. This makes it possible to remove an impurity such as the super absorbent polymers that is contained in the pulp fibers and to generate highly pure pulp fibers and makes it possible to sterilize, bleach, and deodorize the pulp fibers with an oxidizing agent treatment.

The fourth separation step S20 is executed with the fourth separation apparatus 20. The oxidizing agent aqueous solution containing the pulp fibers treated with the first oxidizing agent treatment apparatus 19, that is, the liquid mixture 99, passes through the screen and is separated into the pulp fibers and the oxidizing agent aqueous solution. Due to that, the oxidizing agent aqueous solution passes through the screen and is separated from the liquid mixture 99 and sent out from the fourth separation apparatus 20 (liquid mixture 104). Here, the liquid mixture 104 contains the organic matter having a low molecular weight that is soluble in the oxidizing agent aqueous solution. Meanwhile, the pulp fibers in the liquid mixture 99 is not capable of passing through the screen and remains in the fourth separation apparatus 20 or is sent out through a different passage. The pulp fibers separated and recovered with the fourth separation apparatus 20 as described above become so-called recycled pulp fibers. The recycled pulp fibers are cleaned with cleaning water and taken out.

In the first resupply step S25 (additional resupply step), the liquid mixture 104 separated in the fourth separation step S20 is resupplied to the first oxidizing agent treatment step S19 (first oxidizing agent treatment apparatus 19) with the liquid feeding pump or the like and is reused as an oxidizing agent aqueous solution. It should be noted that the cleaning water used to clean the recycled pulp fibers may be mixed into the liquid mixture 104. In addition, before being returned to the first oxidizing agent treatment apparatus 19, the liquid mixture 104 may be mixed with the mixture 98 and then resupplied to the first oxidizing agent treatment step S19 (first oxidizing agent treatment apparatus 19). The liquid mixture 104, that is, the oxidizing agent aqueous solution is cyclically used in the above-described manner, which makes it possible to reduce the amount of water that is used in the oxidizing agent aqueous solution. It should be noted that, in the case of mixing the cleaning water for the recycled pulp fibers into the liquid mixture 104, a solution in the liquid mixture 104 as much as the amount of the cleaning water may be separated and reused as a cleaning water for, for example, the other materials separated in the first separation step S 13.

Meanwhile, the second oxidizing agent treatment step (viscosity reduction step) S22 is executed with the second oxidizing agent treatment apparatus 22. The liquid mixture 101 having the acidic aqueous solution containing the excrement, the super absorbent polymers that has not been completely removed, the decomposition product of the macromolecular water-absorbent polymers, and the like supplied from the third separation apparatus 18 is treated with an aqueous solution containing an oxidizing agent (first oxidizing agent, for example, ozone) (for example, the acidic aqueous solution, the liquid mixture 101). Therefore, organic matters having a relatively large molecular weight such as the excrement, the super absorbent polymers, the decomposition product thereof, and the like that are contained in the acidic aqueous solution are oxidatively decomposed with the oxidizing agent and solubilized in acidic aqueous solutions. Due to that, the liquid mixture 101 is converted from a state where the viscosity is relatively high to a state where the viscosity is relatively low and becomes the liquid mixture 102. That is, the liquid mixture 102, which is an acidic aqueous solution with a relatively low viscosity containing the organic matters having a relatively small molecular weight, is generated.

The pH adjusting step S23 is executed with the pH adjusting apparatus 23. The liquid mixture 102 supplied from the second oxidizing agent treatment apparatus 22, that is, the acidic aqueous solution is adjusted as necessary such that the pH falls within a predetermined pH range. Thereby, the liquid mixture 102 (acidic aqueous solution) having a pH within the predetermined pH range, that is, the liquid mixture 103 is generated.

In the second resupply step S24 (resupply step), the liquid mixture 103 (acidic aqueous solution) having a pH adjusted to the predetermined pH range in the pH adjusting step S23 is resupplied to the separation apparatus 10 (for example, the hole opening step S11, the breaking step S12, and the first separation step S13) with the liquid feeding pump or the like and reused as an inactivating aqueous solution. The liquid mixture 103, that is, the acidic aqueous solution is cyclically used in the above-described manner, which makes it possible to reduce the amount of water that is used in the acidic aqueous solution. It should be noted that the liquid mixture 103 may be supplied to a different step (apparatus) as necessary. The excess of the liquid mixture 103 is stored in the storage tank 24.

It should be noted that, if the amount of components other than the acidic aqueous solution of the liquid mixture 103 increases, even when the components are organic matters having a relatively small molecular weight, the viscosity of the liquid mixture 103 becomes a relatively high state, and there are cases where it becomes difficult to put the viscosity into a relatively low state even in the second oxidizing agent treatment step S22. In such a case, the organic acid aqueous solution can be reused by removing an impurity (the excrement or the like) by a method of recovering the organic acid aqueous solution described below.

Recycled pulp fibers can be produced from a used absorbent article containing super absorbent polymers, pulp fibers, and excrement by the above-described method.

In the method of producing recycled pulp fibers from a used absorbent article, when a diaper is used as the absorbent article, a citric acid aqueous solution is used as the inactivating aqueous solution, and ozone is used as the oxidizing agent, the amount of water used during a predetermined time (for example, 5 hours) becomes, for example, as described below. In the case of treating approximately 2 tons of used diapers, as water that is used for the citric acid aqueous solution, approximately 4 tons of water is initially supplied to the separation step S 10. The water is circulated and used among the separation step S10, the second oxidizing agent treatment step S22, and the second resupply step S24. Out of the approximately 4 tons of water, approximately 1.2 tons of water is discharged. Therefore, the amount of water supplied is approximately 4 tons, and the amount of water discharged is approximately 1.2 tons. It should be noted that, before being discharged, water to be discharged is reused at the time of recovering citric acid from the citric acid aqueous solution with the recovery apparatus 25 and is discharged after an appropriate detoxification treatment is performed.

In addition, approximately 4 tons of water that is used for the oxidizing agent aqueous solution is initially supplied to the first oxidizing agent treatment step S19, and water that is used as the cleaning water for the recycled pulp fibers is continuously supplied to the fourth separation step S20 and supplied in a total of approximately 2 tons. These waters are circulated and used among the first oxidizing agent treatment step S19, the fourth separation step S20, and the first resupply step S25. Out of the 6 tons of water, approximately 2 tons of water is discharged. Therefore, the amount of water supplied is approximately 6 tons, and the amount of water discharged is approximately 2 tons. It should be noted that, before being discharged, water to be discharged is reused for the recovery of the citric acid aqueous solution with the recovery apparatus 25 and is discharged after an appropriate detoxification treatment is performed.

Therefore, in total, for the treatment of approximately 2 tons of used diapers, the amount of water supplied is approximately 10 tons, that is, approximately 5 times, but the amount of water discharged is approximately 3.2 tons, that is, approximately 1.6 times. Therefore, the present method of producing a recycled pulp can be said as a method in which the amount of water that is used and discharged is extremely small. It should be noted that water that is supplied but not discharged is further used even after the use for the above-described predetermined time. Therefore, in the present method of producing recycled pulp fibers, it can be said that the mass of water that is discharged out of water that is used in the separation step S10, the second oxidizing agent treatment step S22 (viscosity reduction step), the second resupply step S24 (resupply step), the first oxidizing agent treatment step S19 (solubilization step), the fourth separation step S20 (additional separation step), and the first resupply step S25 (additional resupply step) is approximately 1.2 to 2 times the mass of used diapers that are initially supplied to the separation step S10.

In the method according to the present embodiment, the inactivating aqueous solution (for example, the acidic aqueous solution) is returned to the separation step S10 again by the second resupply step S24 after the separation step S10. That is, the inactivating aqueous solution is reused in the separation step S10 again after the separation step S10. Therefore, the addition of a new inactivating aqueous solution can be suppressed, which makes it possible to reduce the amount of water that is used for the inactivating aqueous solution. In this case, since the inactivating aqueous solution after the separation step S10 contains a large amount of an organic matter having a relatively large molecular weight such as excrement, the viscosity of the inactivating aqueous solution becomes high, and it is also conceivable that the reuse of the inactivating aqueous solution as an inactivating aqueous solution may become difficult. Therefore, in the present method, in the second oxidizing agent treatment step S22 (viscosity reduction step) before the second resupply step S24, the organic matter having a relatively large molecular weight such as excrement that is contained in the inactivating aqueous solution is decomposed with the first oxidizing agent (for example, ozone), thereby decreasing the molecular weight of the organic matter and decreasing the viscosity of the inactivating aqueous solution. This makes it possible to decrease the viscosity of the inactivating aqueous solution and to facilitate the reuse of the inactivating aqueous solution. Therefore, in the method of producing recycled pulp fibers from a used absorbent article, an aqueous solution that is recovered from a production step can be made reusable, and the amount of water that is used for the aqueous solution can be reduced.

In the present embodiment, as a preferable aspect, the oxidizing agent aqueous solution is returned to the first oxidizing agent treatment step S19 again by the first resupply step S25 (additional resupply step) after the first oxidizing agent treatment step S19 (solubilization step). That is, the oxidizing agent aqueous solution is reused in the first oxidizing agent treatment step S19 again after the first oxidizing agent treatment step S19. Therefore, the addition of a new oxidizing agent aqueous solution can be suppressed, which makes it possible to reduce the amount of water that is used for the oxidizing agent aqueous solution. In this case, the super absorbent polymers is decomposed in the first oxidizing agent treatment step S19 to have a small molecular weight and is turned into a different decomposition product that is soluble in the oxidizing agent aqueous solution. This makes it possible to suppress the viscosity of the oxidizing agent aqueous solution at a low level and to facilitate the reuse of the oxidizing agent aqueous solution. Therefore, in the method of producing a recycled pulp fibers from a used absorbent article, the amount of water that is used for the aqueous solution can be further reduced by reusing the aqueous solution that is recovered from the production step.

In the present embodiment, as a preferable aspect, the oxidizing agent includes at least one of ozone, chlorine dioxide, hydrogen peroxide, hypochlorous acid, salts of hypochlorous acid, and peracetic acid. These oxidizing agents are capable of easily decreasing the molecular weight of the super absorbent polymers or excrement by an oxidizing action, which makes it possible to suppress the viscosity of the aqueous solution at a low level.

In the present embodiment, as a preferable aspect, the inactivating aqueous solution contains an organic acid as an inactivating agent. The organic acid can be stably present in the production step except for functioning as the inactivating agent. Therefore, the inactivating aqueous solution can be more reliably reused while reducing the influence of the acid on operators, apparatuses, and the like.

In the present embodiment, as a preferable aspect, the organic acid includes citric acid. This makes it possible to remove a polyvalent metal with the citric acid even in a case where the polyvalent metal is contained as an impurity in the reused inactivating aqueous solution. Therefore, the inactivating aqueous solution can be more reliably reused while removing the impurity in the inactivating aqueous solution and reducing the influence of the acid on operators, apparatuses, and the like.

In the present embodiment, as a preferable aspect, the pH adjusting step S23 (adjusting step) of adjusting the pH of the inactivating aqueous solution is included. This makes it possible to adjust the pH of the inactivating aqueous solution to a pH necessary for the organic acid to inactivate the super absorbent polymers. Therefore, the inactivating aqueous solution can be put into a state where the super absorbent polymers can be reliably inactivated and can be more reliably reused.

In the present embodiment, as a preferable aspect, the mass of water that is discharged out of water that is used in the separation step S10, the second oxidizing agent treatment step S22 (viscosity reduction step), the second resupply step S24 (resupply step), the first oxidizing agent treatment step S19 (solubilization step), the fourth separation step S20 (additional separation step), and the first resupply step S25 (additional resupply step) is 1.2 to 2 times the mass of used absorbent articles that are initially supplied to the separation step S10. That is, in the present method, since the aqueous solution is used in a circulated manner, the amount of water that is used can be significantly reduced. Therefore, in the method of producing a recycled pulp fibers from a used absorbent article, the aqueous solution that is recovered from the production step can be made reusable, and the amount of water that is used for the aqueous solution can be reduced.

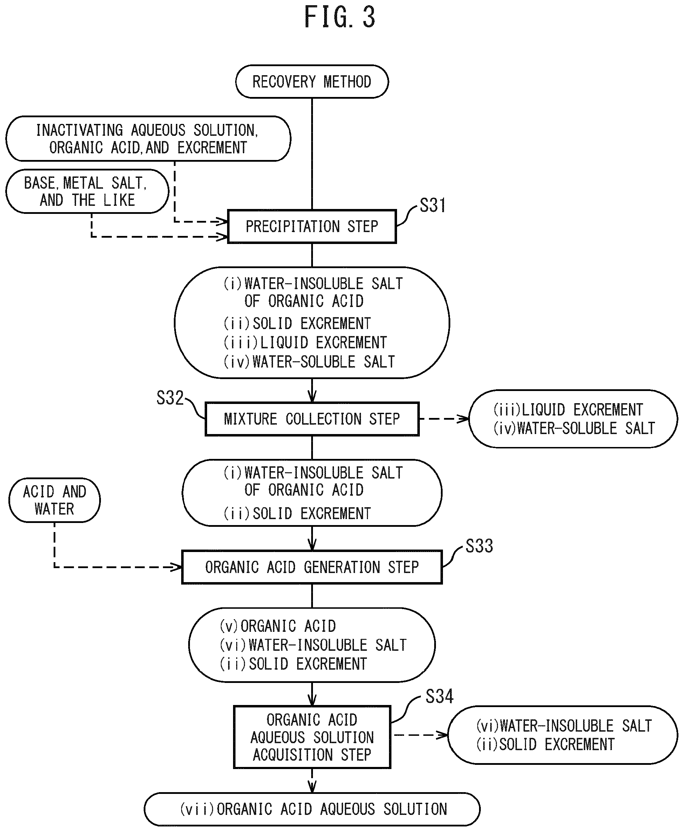

In addition, in a case where the acidic aqueous solution (inactivating aqueous solution) in the liquid mixture 103 that has been stored in the storage tank 24 is the organic acid aqueous solution (liquid mixture 105), the organic acid aqueous solution can be recovered as a relatively highly pure organic acid aqueous solution by removing the impurity (excrement or the like) in the organic acid aqueous solution. FIG. 3 is a flow chart showing an example of a method of recovering the organic acid aqueous solution according to the embodiment.

The method of recovering the organic acid aqueous solution is performed with the recovery apparatus 25. This method includes a precipitation step S31, a mixture collection step S32, an organic acid generation step S33, and an organic acid aqueous solution acquisition step S34. In the precipitation step S31, a water-insoluble salt of an organic acid is precipitated by adding a metal salt containing a di- or higher-valent metal or a base containing a di- or higher-valent metal to the inactivating aqueous solution. In the mixture collection step S32, a mixture of the water-insoluble salt of the organic acid and solid excrement derived from the excrement is collected from the inactivating aqueous solution that has undergone the precipitation step. In the organic acid generation step S33, an aqueous solution containing an organic acid, the water-insoluble salt, and the solid excrement is formed by adding an acid capable of generating a free organic acid and a water-insoluble salt and water to the mixture. In the organic acid aqueous solution acquisition step S34, the water-insoluble salt and the solid excrement are removed from the aqueous solution, and an organic acid aqueous solution containing the organic acid is obtained.

In the precipitation step S31, a metal salt containing a di- or higher-valent metal or a base containing a di- or higher-valent metal (hereinafter, also referred to as "salt for generating a water-insoluble base") is added to the inactivating aqueous solution for the super absorbent polymers (for example, the organic acid aqueous solution) containing the excrement stored in the storage tank 24 and an organic acid, thereby obtaining an inactivating aqueous solution containing (i) the water-insoluble salt of the organic acid, excrement, that is, (ii) solid excrement and (iii) liquid excrement, and (iv) a water-soluble salt. Examples of the di- or higher-valent metal that configures the base for generating a water-insoluble salt include Mg, Ca, Ba, Fe, Ni, Cu, Zn, Al, and a group of any combinations thereof. Examples of the base for generating a water-insoluble salt include magnesium hydroxide, calcium hydroxide, copper hydroxide, zinc hydroxide, and the like. The base for generating a water-insoluble salt is added in an amount that preferably becomes an equivalent amount 0.8 to 3.0 times the organic acid. This is from the viewpoint of forming (i) the water-insoluble salt of the organic acid. In the precipitation step S31, (i) the water-insoluble salt of the organic acid is formed, and the salt crystallizes and sediments. At that time, in (ii) the solid excrement dispersed in the inactivating aqueous solution, fine excrement is attached to the surface of (i) the water-insoluble salt of the organic acid, is incorporated into the crystals of (i) the water-insoluble salt of the organic acid, and aggregate. Therefore, in the mixture collection step S32, (ii) the fine solid excrement is collected as a solid matter [(i) the water-insoluble salt of the organic acid and (ii) the solid excrement] and is not easily contained in a liquid matter [(iii) the liquid excrement and (iv) the water-soluble salt]. Due to that, the concentration of a suspended solid (SS) in the liquid matter becomes low, a filter or the like is not easily clogged at the time of solid-liquid separation that separates the liquid matter and the solid matter, and the amount of sludge generated is reduced at the time of microbially treating the liquid matter.

In the mixture collection step S32, the inactivating aqueous solution that has undergone the precipitation step S1 is separated into the solid matter [(i) the water-insoluble salt of the organic acid and (ii) the solid excrement] and the liquid matter [(iii) the liquid excrement and (iv) the water-soluble salt].

In the organic acid generation step S33, an acid capable of generating a free organic acid and a water-insoluble salt (hereinafter, also referred to as "free organic acid-generating acid") and water are added to the mixture (solid matter), thereby forming an aqueous solution containing (v) an organic acid, (vi) a water-insoluble salt, and (ii) the solid excrement. As the free organic acid-generating acid, an acid having a smaller acid dissociation constant (pKa, in water) than the acid dissociation constant (pKa, in water) of the organic acid is preferable, an organic acid or an inorganic acid can be used, and an inorganic acid is preferable. Examples of the inorganic acid include hydrochloric acid, sulfuric acid, nitric acid, iodic acid, bromic acid, and the like. The free organic acid-generating acid is added in an amount that preferably becomes an equivalent amount 0.8 to 2.0 times the organic acid. This is from the viewpoint of making (i) the water-insoluble salt of the organic acid into (v) the organic acid in a free state. As the water that is used here, for example, a part or all of a solution as much as the amount of the cleaning water separated from the liquid mixture 104, water obtained by reusing the aqueous solution as the cleaning water for the other materials separated in the first separation step S13 and then filtering the aqueous solution, or the like can be used.

In the organic acid aqueous solution acquisition step S34, the solid matter, that is, (vi) the water-insoluble salt and (ii) the solid excrement, is removed from the aqueous solution, and (vii) an organic acid aqueous solution containing the liquid matter, that is, (v) the organic acid, is obtained. After that, (vii) the organic acid aqueous solution may be reused as (vii) the organic acid aqueous solution in the separation step S10 or may be reused in a form of (v) the organic in the separation step S10 after extracting (v) the organic acid from (vii) the organic acid aqueous solution. In the latter case, the aqueous solution from which the organic acid has been extracted is discharged.

### REFERENCE SIGNS LIST

S10: Separation step
S22: Second oxidizing agent treatment step (viscosity reduction step)
S24: Second resupply step

## Claims

1. A method of producing recycled pulp fibers from a used absorbent article containing super absorbent polymers, pulp fibers, and excrement, the method comprising:
a separation step (S10) of separating an inactivating aqueous solution containing the excrement and the pulp fibers, respectively, from a liquid mixture (101) in which the inactivating aqueous solution capable of inactivating the super absorbent polymers and the used absorbent article are mixed together;
a viscosity reduction step (S22) of mixing a first oxidizing agent capable of decomposing the excrement and the separated inactivating aqueous solution, and decomposing the excrement that is contained in the inactivating aqueous solution to reduce a viscosity of the inactivating aqueous solution; and
a resupply step (S24) of returning the inactivating aqueous solution containing a decomposition product formed by decomposition of the excrement to the separation step (S10).

2. The method according to claim 1, further comprising:
a solubilization step of mixing an oxidizing agent aqueous solution containing a second oxidizing agent capable of decomposing the super absorbent polymers and the pulp fibers separated in the separation step (S10), and decomposing the super absorbent polymers that is contained in the pulp fibers to solubilize the super absorbent polymers in the oxidizing agent aqueous solution;
an additional separation step (S20) of separating the oxidizing agent aqueous solution containing an additional decomposition product formed by decomposition of the super absorbent polymers and the pulp fibers; and
an additional resupply step (S25) of returning the oxidizing agent aqueous solution containing the additional decomposition product to the solubilization step.

3. The method according to claim 1 or 2, wherein
the oxidizing agent includes at least one of ozone, chlorine dioxide, hydrogen peroxide, hypochlorous acid, salts of hypochlorous acid, and peracetic acid.

4. The method according to any one of claims 1 to 3, wherein
the inactivating aqueous solution contains an organic acid as an inactivating agent.

5. The method according to claim 4, wherein
the organic acid includes citric acid.

6. The method according to claim 4 or 5, further comprising:
an adjusting step (S23) of adjusting a pH in the inactivating aqueous solution containing a decomposition product formed by decomposition of the super absorbent polymers and the excrement, after the viscosity reduction step (S22) and before the resupply step (S24).

7. The method according to claim 2, wherein
a mass of water that is discharged from water that is used in the separation step (S10), the viscosity reduction step (S22), the resupply step (S24), the solubilization step, the additional separation step (S20), and the additional resupply step (S25) is 1.2 to 2 times a mass of the used absorbent article that is supplied to the separation step (S10).

## Patentansprüche

1. Ein Verfahren zur Herstellung von recycelten Zellstofffasern aus einem gebrauchten absorbierenden Artikel, der superabsorbierende Polymere, Zellstofffasern und Exkrement enthält, wobei das Verfahren Folgendes beinhaltet:
einen Trennschritt (S 10) des Trennens einer inaktivierenden wässrigen Lösung, die das Exkrement bzw. die Zellstofffasern enthält, von einer Flüssigmischung (101), in der die inaktivierende wässrige Lösung, die in der Lage ist, die superabsorbierenden Polymere zu inaktivieren, and der gebrauchte absorbierende Artikel miteinander gemischt sind;
einen Viskositätsreduktionsschritt (S22) des Mischens eines ersten Oxidationsmittels, das in der Lage ist, das Exkrement zu zersetzen, und der getrennten inaktivierenden wässrigen Lösung, und des Zersetzens des in der inaktivierenden wässrigen Lösung enthaltenen Exkrements, um eine Viskosität der inaktivierenden wässrigen Lösung zu reduzieren; und
einen Wiederzuführungsschritt (S24) des Zurückführens der inaktivierenden wässrigen Lösung, die ein durch Zersetzung des Exkrements gebildetes Zersetzungsprodukt enthält, zu dem Trennschritt (S10).

2. Das Verfahren gemäß Anspruch 1, das ferner Folgendes beinhaltet:
einen Solubilisierungsschritt des Mischens einer wässrigen Oxidationsmittellösung, die ein zweites Oxidationsmittel enthält, das in der Lage ist, die superabsorbierenden Polymere zu zersetzen, und der in dem Trennschritt (S 10) getrennten Zellstofffasern und des Zersetzens der in den Zellstofffasern enthaltenen superabsorbierenden Polymere, um die superabsorbierenden Polymere in der wässrigen Oxidationsmittellösung löslich zu machen;
einen zusätzlichen Trennschritt (S20) des Trennens der wässrigen Oxidationsmittellösung, die ein zusätzliches Zersetzungsprodukt enthält, das durch Zersetzung der superabsorbierenden Polymere und der Zellstofffasern gebildet wurde; und
einen zusätzlichen Wiederzuführungsschritt (S25) des Zurückführens der wässrigen Oxidationsmittellösung, die das zusätzliche Zersetzungsprodukt enthält, zu dem Solubilisierungsschritt.

3. Das Verfahren gemäß Anspruch 1 oder 2, wobei
das Oxidationsmittel mindestens eines von Ozon, Chlordioxid, Wasserstoffperoxid, hypochloriger Säure, Salzen der hypochlorigen Säure und Peroxyessigsäure umfasst.

4. Das Verfahren gemäß einem der Ansprüche 1 bis 3, wobei
die inaktivierende wässrige Lösung eine organische Säure als inaktivierendes Mittel enthält.

5. Das Verfahren gemäß Anspruch 4, wobei
die organische Säure Citronensäure umfasst.

6. Das Verfahren gemäß Anspruch 4 oder 5, das ferner Folgendes beinhaltet:
einen Einstellungsschritt (S23) des Einstellens eines pH-Werts in der inaktivierenden wässrigen Lösung, die ein durch Zersetzung der superabsorbierenden Polymere und des Exkrements gebildetes Zersetzungsprodukt enthält, nach dem Viskositätsreduktionsschritt (S22) und vor dem Wiederzuführungsschritt (S24).

7. Das Verfahren gemäß Anspruch 2, wobei
eine Masse des Wassers, die aus Wasser abgegeben wird, das bei dem Trennschritt (S10), dem Viskositätsreduktionsschritt (S22), dem Wiederzuführungsschritt (S24), dem Solubilisierungsschritt, dem zusätzlichen Trennschritt (S20) und dem zusätzlichen Wiederzuführungsschritt (S25) verwendet wird, das 1,2-Fache bis 2-Fache der Masse des gebrauchten absorbierenden Artikels, die dem Trennschritt (S10) zugeführt wird, beträgt.

## Revendications

1. Procédé de production de fibres de pâte recyclées à partir d'un article absorbant usagé contenant des polymères superabsorbants, des fibres de pâte et des matières fécales, le procédé comprenant :
une étape de séparation (S10) consistant à séparer une solution aqueuse inactivante contenant les matières fécales et les fibres de pâte, respectivement, d'un mélange liquide (101) dans lequel la solution aqueuse inactivante capable d'inactiver les polymères superabsorbants et l'article absorbant usagé sont mélangés ensemble ;
une étape de réduction de la viscosité (S22) consistant à mélanger un premier agent oxydant capable de décomposer les matières fécales et la solution aqueuse inactivante séparée et à décomposer les matières fécales contenues dans la solution aqueuse inactivante pour réduire une viscosité de la solution aqueuse inactivante ; et
une étape de réapprovisionnement (S24) consistant à soumettre à nouveau la solution aqueuse inactivante contenant un produit de décomposition formé par décomposition des matières fécales à l'étape de séparation (S10).

2. Procédé selon la revendication 1, comprenant en outre :
une étape de solubilisation consistant à mélanger une solution aqueuse d'un agent oxydant contenant un second agent oxydant capable de décomposer les polymères superabsorbants et les fibres de pâte séparés à l'étape de séparation (S10) et à décomposer les polymères superabsorbants contenus dans les fibres de pâte pour solubiliser les polymères superabsorbants dans la solution aqueuse de l'agent oxydant ;
une étape de séparation supplémentaire (S20) consistant à séparer la solution aqueuse de l'agent oxydant contenant un produit de décomposition supplémentaire formé par décomposition des polymères superabsorbants et des fibres de pâte ; et
une étape de réapprovisionnement supplémentaire (S25) consistant à soumettre à nouveau la solution aqueuse de l'agent oxydant contenant le produit de décomposition supplémentaire à l'étape de solubilisation (S10).

3. Procédé selon la revendication 1 ou 2, où
l'agent oxydant inclut au moins un parmi l'ozone, le dioxyde de chlore, le peroxyde d'hydrogène, l'acide hypochloreux, les sels de l'acide hypochloreux et l'acide peracétique.

4. Procédé selon l'une quelconque des revendications 1 à 3, où
la solution aqueuse inactivante contient un acide organique comme agent inactivant.

5. Procédé selon la revendication 4, où
l'acide organique inclut l'acide citrique.

6. Procédé selon l'une quelconque des revendications 4 ou 5 comprenant en outre :
une étape d'ajustement (S23) consistant à ajuster un pH de la solution aqueuse inactivante contenant un produit de décomposition formé par décomposition des polymères superabsorbants et des matières fécales après l'étape de réduction de la viscosité (S22) et avant l'étape de réapprovisionnement (S24).

7. Procédé selon la revendication 2, où
une masse d'eau qui est larguée de l'eau utilisée à l'étape de séparation (S10), l'étape de réduction de la viscosité (S22), l'étape de réapprovisionnement (S24), l'étape de solubilisation, l'étape de séparation supplémentaire (S20) et l'étape de réapprovisionnement supplémentaire (S25) correspond à 1,2 à 2 fois une masse de l'article absorbant usagé qui est fourni à l'étape de séparation (S10).
